# EUROPEAN PATENT APPLICATION

(11) **EP 4 507 079 A1**
(43) Date of publication of application: **12.02.2025**
(21) Application number: 23893322.0
(22) Date of filing: 29.08.2023
(51) Int. Cl.: H01M 50/112, H01M 50/105

(54) **BATTERY AND ELECTRONIC DEVICE**

(30) Priority: 21.11.2022 CN 202223079630 U
(71) Applicant: Zhuhai CosMX Battery Co., Ltd., Zhuhai, Guangdong 519180 (CN)
(72) Inventor: XIANG, Yu, Zhuhai, Guangdong 519180 (CN); SHENG, Donghui, Zhuhai, Guangdong 519180 (CN); LIU, Chunyu, Zhuhai, Guangdong 519180 (CN)
(74) Representative: Murgitroyd & Company
(86) International application number: PCT/CN2023/115460
(87) International publication number: WO 2024/109228

(57) **Abstract**

Disclosed are a battery and an electronic device. The battery includes a film housing, a first cell, a second cell and a partition plate. The film housing is provided with an accommodating cavity, a first accommodating groove adapted for the first cell is formed on a side of the partition plate. The first cell is placed in the first accommodating groove, the second cell is placed on another side of the partition plate, the first accommodating groove and the second cell are disposed side by side in the accommodating cavity, and the first cell and the second cell are separated by the partition plate. The battery provided by the embodiments of the present application may reduce a situation that the partition plate is slipped off, so that separation effect between the cells is improved, and thus safety and reliability of the battery are enhanced.

## Description

### TECHNICAL FIELD

The present application relates to the field of battery technologies, and in particular, to a battery and an electronic device.

### BACKGROUND

With the development of battery technologies, higher requirements are put forward for an energy density of batteries. Generally, two cells are packaged into a film housing, and the two cells are disposed in series to form a cell group connected in series inside, so the energy density of the batteries may be effectively improved. In order to prevent decomposition of an electrolytic solution caused by an excessively high voltage after being connected in series, the two cells are required to be spaced from each other by a partition plate.

In the conventional art, the cells disposed inside the film housing are usually disposed in a stacked manner. However, in case that there is a dimensional requirement on a thickness of the battery, the two cells need to be disposed side by side. When the two cells are disposed side by side, the partition plate is prone to be slipped off from the two cells, resulting in a poor separation effect between the cells, and thus safety of the battery is affected.

### SUMMARY

Embodiments of the present application provide a battery and an electronic device to solve a problem in the conventional art that a partition plate is prone to be slipped off from cells which results in a poor separation effect of the cells.

The embodiments of the present application provide a battery which includes a film housing, a first cell, a second cell and a partition plate. The film housing is provided with an accommodating cavity, a first accommodating groove adapted for the first cell is formed on a side of the partition plate, the first cell is placed in the first accommodating groove, the second cell is placed on another side of the partition plate, the first accommodating groove and the second cell are disposed side by side in the accommodating cavity, and the first cell and the second cell are separated by the partition plate.

Optionally, at least one first bump is formed on the first accommodating groove, and each first bump in the at least one first bump protrudes away from an opening of the first accommodating groove.

Optionally, the at least one first bump includes four first bumps, and the four first bumps are respectively disposed at four vertex angle positions of the first accommodating groove.

Optionally, a diameter of the first bump ranges from 0.1 mm to 10 mm; and/or a height of the first bump ranges from 0.1 mm to 5 mm.

Optionally, each first bump abuts against an inner wall of the film housing.

Optionally, a second accommodating groove adapted for the second cell is formed on the partition plate, a direction of an opening of the second accommodating groove is opposite to a direction of an opening of the first accommodating groove, the second cell is placed in the second accommodating groove, and the second accommodating groove is disposed in the accommodating cavity.

Optionally, at least one second bump is formed on the second accommodating groove, and each second bump in the at least one second bump protrudes away from the opening of the second accommodating groove.

Optionally, the battery further includes a third cell, a third accommodating groove adapted for the third cell is further formed on the partition plate, a direction of an opening of the third accommodating groove is the same as a direction of an opening of the first accommodating groove, the third cell is placed in the third accommodating groove, the second cell is located between the first accommodating groove and the third accommodating groove, and the first accommodating groove, the second cell and the third accommodating groove are disposed side by side in the accommodating cavity.

Optionally, at least one third bump is formed on the third accommodating groove, and each third bump in the at least one third bump protrudes away from the opening of the third accommodating groove.

Optionally, the first cell, the second cell and the third cell have a same size.

Optionally, a material of the partition plate is an organic polymer film.

Optionally, a material of the organic polymer film includes one or more of the following: polypropylene, polyvinyl chloride, polyethylene, polyethylene terephthalate, polyamide, polyphthalamide, polyacrylonitrile, polyvinyl formal and polystyrene.

Optionally, a thickness of the partition plate ranges from 1 µm to 500 µm.

Optionally, the thickness of the partition plate ranges from 40 µm to 80 µm.

Optionally, a length of the first accommodating groove is 0 mm to 1 mm greater than a length of the first cell; and/ or
a width of the first accommodating groove is 0 mm to 1 mm greater than a width of the first cell.

Optionally, a length of the first accommodating groove is 0.3 mm to 0.5 mm greater than a length of the first cell; and/ or
a width of the first accommodating groove is 0.3 mm to 0.5 mm greater than a width of the first cell.

The embodiments of the present application further provide an electronic device including the foregoing battery.

In the embodiments of the present application, the first accommodating groove adapted for the first cell is formed on the side of the partition plate, the first cell is placed in the first accommodating groove, and the first cell is fixed by the first accommodating groove. Then the second cell is placed on another side of the partition plate, and the first accommodating groove and the second cell are disposed side by side in the accommodating cavity to make the first cell and the second cell be separated by the partition plate after being disposed side by side. Through supporting effect of the second cell on the partition plate, a situation that the partition plate is slipped off is further reduced, thereby the separation effect between the cells is improved, and thus safety and reliability of the battery are enhanced.

### BRIEF DESCRIPTION OF THE DRAWINGS

In order to explain technical solutions of embodiments of the present application more clearly, the drawings required to be used in description of the embodiments or the conventional technologies will be briefly introduced below. Apparently, the drawings described below are merely some embodiments of the present application. For a person skilled in the art, other drawings may be obtained according to these drawings without creative efforts.
FIG. 1 is a schematic structural diagram of a battery according to an embodiment of the present application.
FIG. 2 is a schematic structural diagram of a battery according to another embodiment of the present application.
FIG. 3 is a schematic structural diagram of a battery according to still another embodiment of the present application.
FIG. 4 is a schematic structural diagram of a battery according to yet another embodiment of the present application.
FIG. 5 is a schematic structural diagram of a battery according to still yet another embodiment of the present application.
FIG. 6 is a schematic structural diagram of a film housing and a partition plate of a battery according to an embodiment of the present application.
FIG. 7 is a schematic structural diagram of a film housing and a partition plate of a battery according to another embodiment of the present application.
FIG. 8 is a schematic structural diagram of a partition plate of a battery according to an embodiment of the present application.
FIG. 9 is a schematic diagram of blow molding of a partition plate of a battery according to an embodiment of the present application.
FIG. 10 is a schematic diagram of blow molding of a partition plate of a battery according to another embodiment of the present application.
FIG. 11 is a schematic diagram of blow molding of a partition plate of a battery according to still another embodiment of the present application.
FIG. 12 is a schematic structural diagram of a bump of a battery according to an embodiment of the present application.

### DETAILED DESCRIPTION OF THE EMBODIMENTS

In the following, technical solutions in the embodiments of the present application will be clearly and completely described with reference to the drawings in the embodiments of the present application. Apparently, the described embodiments are a portion of the embodiment of the application, rather than all of the embodiments of the present application. Based on the embodiments in the present application, all other embodiments obtained by a person skilled in the art without creative efforts shall fall within the protection scope of the present application.

The terms "first", "second" and the like in the specification and claims of the present application are intended to be used for distinguishing similar objects, but are not intended to be used for describing a specific order or sequence. It should be understood that the structures used in this way may be interchanged under appropriate circumstances to make the embodiments of the present application be capable of being implemented in an order other than those illustrated or described herein. In addition, the objects distinguished by the "first", "second" and the like are generally one type, and the number of the objects is not limited, for example, the first object may be one or more.

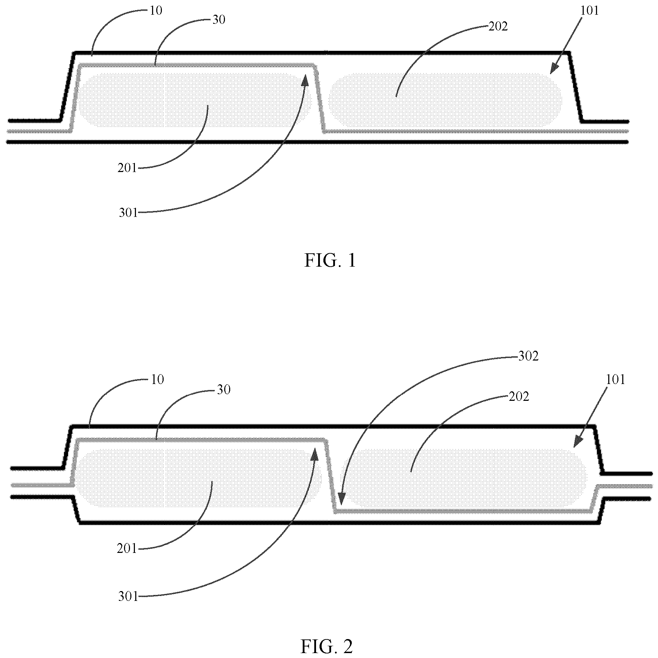

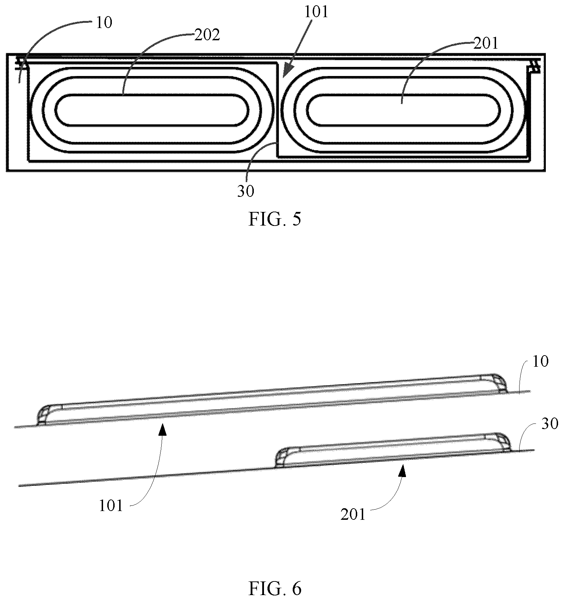

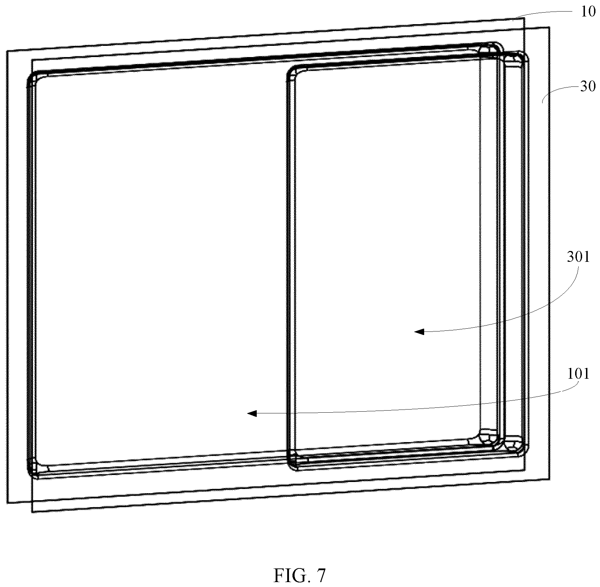

Embodiments of the present application provides a battery, as shown in FIG. 1 to FIG. 8, which includes a film housing 10, a first cell 201, a second cell 202 and a partition plate 30. The film housing 10 is provided with an accommodating cavity 101, a first accommodating groove 301 adapted for the first cell 201 is formed on a side of the partition plate 30, the first cell 201 is placed in the first accommodating groove 301, and the second cell 202 is placed on another one side of the partition plate 30. The first accommodating groove 301 and the second cell 202 are disposed side by side in the accommodating cavity 101, and the first cell 201 and the second cell 202 are separated by the partition plate 30.

In the present embodiment, the first cell 201 and the second cell 202 are disposed side by side, and then are connected in series, so that under a condition of keeping capacity unchanged, an output voltage of the battery is increased difficulty of battery assembling (PACK) is reduced, and a width and a thickness of the battery are reduced after the pack, thereby an energy density is improved. The first accommodating groove 301 adapted for the first cell 201 is formed on the side of the partition plate 30, the first cell 201 is placed in the first accommodating groove 301, and the first cell 201 is fixed by the first accommodating groove 301. Then, the second cell 202 is placed on another side of the partition plate 30, the first accommodating groove 301 and the second cell 202 are disposed side by side in the accommodating cavity 101 to make the first cell 201 and the second cell 202 be separated by the partition plate 30 after being disposed side by side. Through supporting effect of the second cell 202 on the partition plate 30, a situation that the partition plate 30 is slipped off is further reduced, thereby the separation effect between the cells is improved, and thus safety and reliability of the battery are enhanced.

In some embodiments, at least one first bump 300 is formed on the first accommodating groove 301, and each first bump 300 in the at least one first bump 300 protrudes away from an opening of the first accommodating groove 301. The first bump 300 may increase a friction force between the film housing 10 and the first accommodating groove 301 to reduce the situation that the partition plate 30 is slipped off, or under a condition that the battery falls and collides, the first bump 300 may relieve an extrusion effect of the partition plate 30 on the first cell 201. The number of the first bump 300 may be one or at least two.

In some embodiments, the first bump 300 may abut against an inner wall of the film housing 10, so that the friction force between the film housing 10 and the first accommodating groove 301 may be further increased, and the situation that the partition plate 30 is slipped off is reduced.

For example, at least two first bumps 300 are formed on the first accommodating groove 301. The at least two first bumps 300 formed on the first accommodating groove 301 protrude away from the opening of the first accommodating groove 301 to make the first bumps 300 abut against the inner wall of the film housing 10, so that the friction force between the film housing 10 and the first accommodating groove 301 is increased, and thus the situation that the partition plate 30 is slipped off is reduced. In addition, the first bumps 300 protrude away from the opening of the first accommodating groove 301, so that a space in a pit of the first accommodating groove 301 is increased, and under the condition that the battery falls and collides, the battery may be buffered by the first bumps 300 to relieve the extrusion effect of the partition plate 30 on the first cell 201.

When the partition plate 30 is assembled, the first bumps 300 may be served as an auxiliary positioning structure to improve assembly precision.

Further, the first accommodating groove 301 may be an accommodating groove formed by performing blow molding on the partition plate 30, or the first bumps 300 may be a bump (or referred to as an abrupt change point) formed by a pressure difference when performing a blow molding process of the partition plate 30, and the number of first bump 300 depends on the number of holes for vacuumizing reserved in a mold in the blow molding process. In this way, a matching degree between the partition plate 30 and the first cell 201 is enhanced, so that stability between the first cell 201 and the first accommodating groove 301 is improved, and thus the situation that the partition plate 30 is slipped off is reduced.

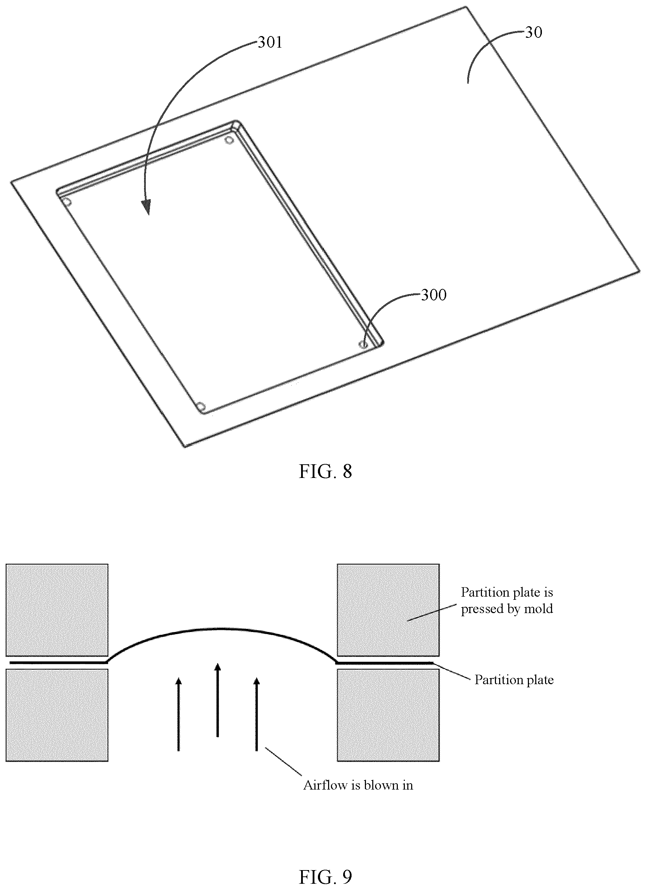

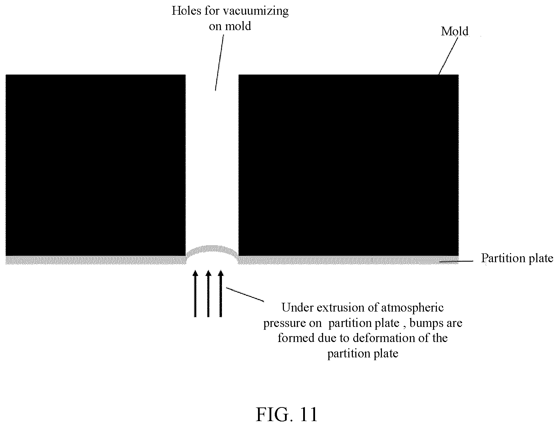

In an example, as shown in FIG. 9 to FIG. 11, firstly, a partition plate to be processed may be fixed through a first fixed mold set and a second fixed mold set. Both the first fixed mold set and the second fixed mold set include an upper clamping head and a lower clamping head, and the upper lamping head and the lower clamping head in each set are disposed opposite to each other to be fixed on two sides of the partition plate to be processed. There is a certain distance between the first fixed mold set and the second fixed mold set to facilitate the subsequent blow molding.

After the partition plate to be processed is heated to a softening point, an airflow is blown between the first fixed mold set and the second fixed mold set to make the partition plate to be processed be sunken to form a pit.

A female mold is placed at a position of the pit, and the female mold is provided with the holes for vacuumizing. Air between the pit and the female mold is vacuumized through the holes for vacuumizing reserved on the mold to make the partition plate to be processed and the female mold completely fit with each other. A size of the female mold may be adjusted according to a size of the first cell 201 to form the first accommodating groove 301 adapted for the first cell 201;

After cooling and shaping, a partition plate having the first accommodating groove 301 is obtained.

Atop edge and bottom edge of the partition plate are cut off, so that the partition plate 30 adapted for a size of the film housing is obtained after cutting. In other words, the partition plate 30 is made to flush with edges of the film housing, so that the first cell 201 is placed in the first accommodating groove 301, the second cell 202 is placed on another side of the partition plate 30, and the film housing is packaged after the first accommodating groove 301 and the second cell 202 are disposed side by side in the accommodating cavity 101.

The film housing 10 may include an upper film housing and a lower film housing, and at least one of the upper film housing and the lower film housing is punched to form at least one pit. Then, the upper film housing and the lower film housing fit with each other to form the accommodating cavity 101 for placing the cell and the partition plate 30.

The film housing 10 may be an aluminum-plastic film.

Optionally, as shown in FIG. 2, a second accommodating groove 302 adapted for the second cell 202 is formed on the partition plate 30, a direction of an opening of the second accommodating groove 302 is opposite to a direction of an opening of the first accommodating groove 301. The second cell 202 is placed in the second accommodating groove 302, and the second accommodating groove 302 is disposed in the accommodating cavity 101.

In the present implementation, the first accommodating groove 301 adapted for the first cell 201 is formed on the side of the partition plate 30, and the second accommodating groove 302 adapted for the second cell 202 is formed on another side of the partition plate 30. The first cell 201 is placed in the first accommodating groove 301, and the second cell 202 is placed in the second accommodating groove 302, then, the first accommodating groove 301 and the second accommodating groove 302 are disposed in the accommodating cavity 101 to make the first cell 201 and the second cell 202 be disposed side by side and separated by the partition plate 30.

In some embodiments, the first cell 201 is fixed through the first accommodating groove 301, a first bump 300 is formed on the first accommodating groove 301, so that a friction force between the film housing 10 and the first accommodating groove 301 is increased, and thus the situation that the partition plate 30 is slipped off is reduced. In addition, the space in the pit of the first accommodating groove 301 is increased, under the condition that the battery falls or collides, the battery may be buffered by the first bumps 300 to relieve the extrusion effect of the partition plate 30 on the first cell 201.

In some embodiments, at least one second bump is formed on the second accommodating groove 302, and each second bump in the at least one second bump protrudes away from an opening of the second accommodating groove 302. The second bump may increase a friction force between the film housing 10 and the second accommodating groove 302, so that the situation that the partition plate 30 is slipped off is reduced, or under the condition that the battery falls or collides, the second bump may relieve the extrusion effect of the partition plate 30 on the second cell 202. The number of the second bump may be one or at least two.

For example, at least two second bumps are formed on the second accommodating groove 302.

The second cell 202 is fixed through the second accommodating groove 302, the second bump is formed on the second accommodating groove 302, so that the friction force between the film housing 10 and the second accommodating groove 302 is increased, and thus the situation that the partition plate 30 is slipped off is further reduced. In addition, the space in the pit of the second accommodating groove 302 is increased, so that under the condition that the battery falls and collides, the battery may be buffered by the second bumps 300 to relieve the extrusion effect of the partition plate 30 on the second cell 201, and thus the safety of the battery is improved.

In some embodiments, the second bump may abut against an inner wall of the film housing, so that the friction force between the film housing 10 and the second accommodating groove 302 may be further increased, and the situation that the partition plate 30 is slipped off is reduced.

When the partition plate 30 is assembled, the second bumps may be served as an auxiliary positioning structure to improve the assembly precision.

The first accommodating groove 301 and the second accommodating groove 302 may be accommodating grooves formed by blow molding of the partition plate 30 respectively, and the second bump is formed in the same way as the first bump 300.

In an example, firstly, a partition plate to be processed may be fixed through the first fixed mold set and the second fixed mold set, both the first fixed mold set and the second fixed mold set include the upper clamping head and the lower clamping head, the upper and the lower clamping head in each set are disposed opposite to each other to be fixed on two sides of the partition plate to be processed, and there is a certain distance between the first fixed mold set and the second fixed mold set to facilitate the subsequent blow molding.

After the partition plate to be processed is heated to a softening point, an airflow is blown between the first fixed mold set and the second fixed mold set to make the partition plate to be processed be sunken to form a first pit. A first female mold is placed at a position of the first pit, the first female mold is provided with through-holes for vacuumizing, air between the first pit and the first female mold is vacuumized through the through-hole reserved on the mold to make the partition plate to be processed and the first female mold completely fit with each other, and the size of the first female mold may be adjusted according to the size of the first cell 201 to form the first accommodating groove 301 adapted for the first cell 201.

After cooling and shaping, a partition plate having a first accommodating groove 301 is obtained, and then, the above steps are repeated on a position of the partition plate adjacent to the first accommodating groove 301.

When the airflow is blown between the first fixed mold set and the second fixed mold set, a second pit is formed when the partition plate is sunken, and a sunken direction of the second pit is opposite to a sunken direction of the first pit.

A second female mold is placed at a position of the second pit, the second female mold is provided with holes for vacuumizing, air between the second pit and the second female mold is vacuumized through the through-holes reserved on the mold to make the partition plate and the second female mold completely fit with each other. A size of the second female mold may be adjusted according to a size of the second cell 202 to form the second accommodating groove 302 adapted for the second cell 202. In this way, the first cell 201 is placed in the first accommodating groove 301, and the second cell 202 is placed in the second accommodating groove 302, the matching degree between the partition plate 30 and the first cell 201 and the matching degree between the partition plate 30 and the first cell 201 and the matching degree between the partition plate 30 and the second cell 202 are enhanced, so that the stability between the first cell 201 and the first accommodating groove 301 and the stability between the second cell 202 and the second accommodating groove 302 is improved, and thus the situation that the partition plate 30 is slipped off is reduced.

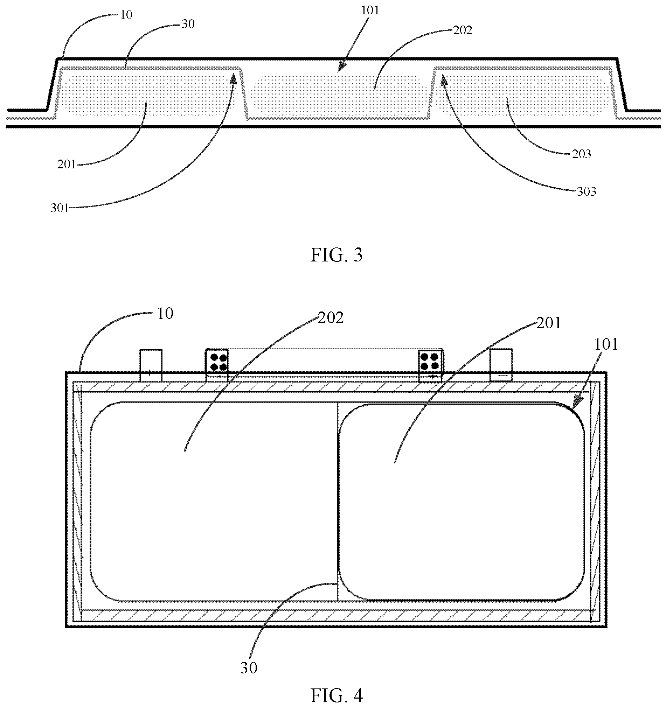

Optionally, as shown in FIG. 3, the battery further includes a third cell 203, a third accommodating groove 303 adapted for the third cell 203 is further formed in the partition plate 30, a direction of an opening of the third accommodating groove 303 is the same as a direction of the opening of the first accommodating groove 301, the third cell 203 is placed in the third accommodating groove 303, and the second cell 202 is located between the first accommodating groove 301 and the third accommodating groove 303. The first accommodating groove 301, the second cell 202 and the third accommodating groove 303 are disposed side by side in the accommodating cavity 101.

In the present implementation, the first accommodating groove 301 adapted for the first cell 201 is formed on the side of the partition plate 30, the third accommodating groove 303 adapted for the third cell 203 is further formed on the partition plate 30, and the second cell 202 is disposed between the first accommodating groove 301 and the third accommodating groove 303. The first cell 201 and the third cell 203 are respectively placed in the first accommodating groove 301and the third accommodating groove 303 to separate the first cell 201 and the third cell 203. Further, outer walls of the first accommodating groove 301 and the third accommodating groove 303 may respectively abut against two sides of the second cell 202 to make the first cell 201, the second cell 202 and the third cell 203 be disposed side by side and be separated by the partition plate 30.

In some embodiments, the first cell 201 is fixed through the first accommodating groove 301, a first bump 300 is formed on the first accommodating groove 301, so that a friction force between the film housing 10 and the first accommodating groove 301 is increased, and thus the situation that the partition plate 30 is slipped off is reduced. In addition, a space in a pit of the first accommodating groove 301 is increased, under the condition that the battery falls or collides, the battery may be buffered by the first bump 300 to relieve the extrusion effect of the partition plate 30 on the first cell 201.

In some embodiments, at least one third bump is formed on the third accommodating groove 303, and each third bump in the at least one third bump protrudes away from an opening of the third accommodating groove 303. The third bump may increase a friction force between the film housing 10 and the third accommodating groove 303, so that the situation that the partition plate 30 is slipped off is reduced, or under the condition that the battery falls or collides, the third bump may relieve the extrusion effect of the partition plate 30 on the third cell 203. The number of the third bump may be one or at least two.

For example, at least two third bumps are formed on the third accommodating groove 303.

The third cell 303 is fixed through the third accommodating groove 303, the third bump is formed on the third accommodating groove 303, so that the friction force between the film housing 10 and the third accommodating groove 303 is increased, and thus the situation that the partition plate 30 is slipped off is further reduced. In addition, a space in a pit of the third accommodating groove 303 is increased, so that under the condition that the battery falls or collides, the battery may be buffered by the first bumps 300 to relieve the extrusion effect of the partition plate 30 on the first cell 201.

In addition, the second cell 202 is separately disposed with the first cell 201 and the third cell 203 through the partition plate 30, through the supporting effect of the second cell 202, the situation that the partition plate 30 is slipped off is reduced, so that the safety and reliability of the battery are enhanced.

When the partition plate 30 is assembled, the third bumps may be served as an auxiliary positioning structure to improve assembly precision.

The first accommodating groove 301 and the third accommodating groove 303 may be accommodating grooves formed by blow molding of the partition plate 30 respectively, and the third bump may be formed in the same way as the first bump 300.

In an example, firstly, a partition plate to be processed may be fixed through a first fixed mold set and a second fixed mold set, and both the first fixed mold set and the second fixed mold set include an upper clamping head and a lower clamping head. The upper and the lower clamping head in each set are disposed opposite to each other to be fixed on two sides of the partition plate to be processed, and there is a certain distance between the first fixed mold set and the second fixed mold set to facilitate the subsequent blow molding.

After the partition plate to be processed is heated to a softening point, an airflow is blown between the first fixed mold set and the second fixed mold set to make the partition plate to be processed be sunken to form a first pit. A first female mold is placed at a position of the first pit. The first female mold is provided with through-holes for vacuumizing, air between the first pit and the first female mold is vacuumized through the through-holes reserved on the mold to make the partition plate to be processed and the first female mold completely fit with each other. A size of the first female mold may be adjusted according to the size of the first cell 201 to form the first accommodating groove 301 adapted for the first cell 201.

After cooling and shaping, a partition plate having the first accommodating groove 301 is obtained, and then, the above steps are repeated at a position of the partition plate with a preset distance from the first accommodating groove 301. The preset distance may be a width of the second cell 202.

The airflow is blown between the first fixed mold set and the second fixed mold set to make a second pit be formed when the partition plate is sunken, and a sunken direction of the second pit is the same as a direction sunken of the first pit.

A second female mold is placed at a position of the second pit. The second female mold is provided with through-holes for vacuumizing, air between the second pit and the second female mold is vacuumized through the through-holes reserved on the mold to make the partition plate and the second female mold completely fit with each other. A size of the second female mold may be adjusted according to a size of the third cell 203 to form the third accommodating groove 303 adapted for the third cell 203. In this way, the first cell 201 and the third cell 203 are placed in the first accommodating groove 301 and the third accommodating groove 303 respectively, and the second cell 202 is placed between the first accommodating groove 301 and third accommodating groove 303, the matching degree between the partition plate 30 and the first cell 201 and the matching degree between the partition plate 30 and the third cell 203 are enhanced, so that the stability between the first cell 201 and the first accommodating groove 301 and the stability between the third cell 203 and the third accommodating groove 303 are improved, and thus the situation that the partition plate 30 is slipped off is reduced.

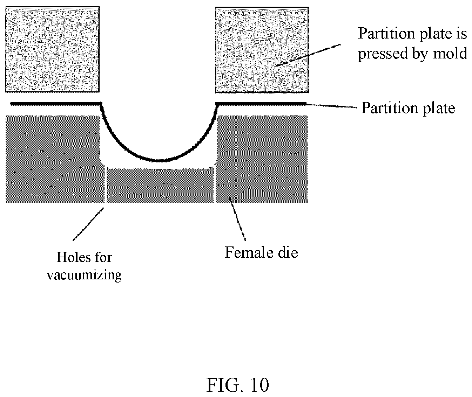

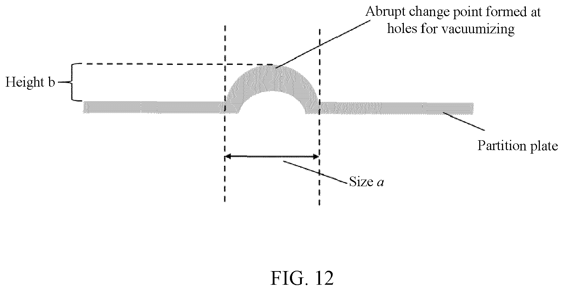

As shown in FIG. 10 to FIG. 12, the air between the pit and the female mold is vacuumized through the holes for vacuumizing reserved on the female mold to make the partition plate and the female mold completely fit with each other. The partition plate located at the holes for vacuumizing will form bumps due to the vacuum effect, and the bump protrudes away from the opening of the accommodating groove where the bump is located. That is, the bumps are formed through holes for vacuumizing reserved on the mold, after vacuumizing, a pressure difference is formed between inside and outside of the partition plate 30, and under extrusion of atmospheric pressure, the bumps are formed due to deformation of the partition plate 30.

A diameter (dimension *a*) of the first bump 300 depends on a diameter of the hole for vacuumizing, and the diameter of the first bump 300 ranges from 0.1 mm to 10 mm; and/ or

a height (height b) of the first bump 300 ranges from 0.1 mm to 5 mm to reduce damage of the partition plate 30 caused by the excessively high height of the first bump 300, meanwhile, the supporting effect of the first bump 300 on the first cell 201 is enhanced.

It should be noted that, similarly, the second bump and the third bump may have same structural features as the first bump 300, and may also have the same technical effect as the first bump 300, and details will not be described herein again.

It should be noted that, by adopting a method of blow molding, more accommodating grooves for placing the cell may be processed on the partition plate 30 to better solve the problem of positioning. The number of the accommodating grooves may be adjusted according to the number of the cells and an overall structure of the battery. For example, the battery may further include a fourth cell and a fifth cell and the like, and a fourth accommodating groove and a fifth accommodating groove and the like may be further formed on the partition plate 30, which may also have the same technical effect similarly, and details will not be described herein again.

Optionally, the first cell 201, the second cell 202 and the third cell 203 have a same size.

In an embodiment, the first cell 201, the second cell 202 and the third cell 203 are designed to have the same structural and size to facilitate processing being performed on the partition plate 30. In other words, the partition plate 30 may be processed by using molds with the same structure and the same size to make each of the accommodating grooves formed on the partition plate 30 adapt to each of the cells, so that accuracy of the positioning of the partition plate 30 is improved, the separation effect between the cells is enhanced, and thus safety and reliability of the battery is improved.

Optionally, the partition plate 30 may be an organic polymer film. A material of the organic polymer film may include one or more of the following: polypropylene, polyvinyl chloride, polyethylene, polyethylene terephthalate, polyamide, polyphthalamide, polyacrylonitrile, polyvinyl formal and polystyrene. In this way, the stability of the partition plate 30 after forming may be enhanced.

Preferably, the partition plate 30 may be polypropylene, when the partition plate 30 is performed the blow molding, a softening point of the polypropylene may range from 130°C to 150°C, so that the partition plate 30 is conveniently to be processed to form an accommodation groove.

The thickness of the partition plate 30 is too large, resulting in a decrease in the energy density of the battery; or the thickness of the partition plate 30 is too small, resulting in its separation effect for the cell is poor. Optionally, the thickness of the partition plate 30 may range from 1 µm to 500 µm to both consider the energy density of the battery and the separation effect for the cell.

Preferably, the thickness of the partition plate 30 may range from 40 µm to 80 µm.

Optionally, a length of the first accommodating groove 301 is 0 mm to 1 mm greater than a length of the first cell 201; and/ or

a width of the first accommodating groove 301 is 0 mm to 1 mm greater than a width of the first cell 201.

In an example, after the partition plate to be processed is softened, when the softened partition plate is vacuumized, the length of the female mold used is 0 mm to 1 mm longer than the length of the first cell 201, and the width of the female mold is 0 mm to 1 mm greater than the width of the first cell 201. In this way, the length of the first accommodating groove 301 formed after vacuumed is 0 mm to 1 mm greater than the length of the first cell 201, and/ or, the width of the first accommodating groove 301 is 0 mm to 1 mm greater than the width of the first cell 201, to adapt to the size of the first cell 201.

Preferably, the length of the first accommodating groove 301 is 0.3 mm to 0.5 mm greater than the length of the first cell 201, and/ or, the width of the first accommodating groove 301 is 0.3 mm to 0.5 mm greater than the width of the first cell 201, to adapt to the size of the first cell 201, so that the stability of the cell placed in the accommodating groove is improved.

It should be noted that the size of the second accommodating groove 302 or the size of the third accommodating groove 303 may be the same as the size of the first accommodating groove 301, and the same technical effect may also be achieved, and details will not be described herein again.

Optionally, the first accommodating groove 301 includes four first bumps 300, and the four first bumps 300 are respectively disposed at four vertex angle positions of the first accommodating groove 301.

In an example, the number of the holes for vacuumizing reserved on the female mold is greater than or equal to 2, so that the number of the first bumps 300 in the first accommodating groove 301 is greater than or equal to 2. Moreover, the two bumps 300 are symmetrically disposed in the accommodating groove. In this way, when vacuumizing is performed through the two symmetrical holes for vacuumizing reserved on the female mold separately, air between the partition plate to be processed and the female mold may be uniformly discharged, to make the thickness of the formed accommodating groove be uniform at positions of the two first bumps 300, so that a situation that the thickness of the partition plate 30 is not uniform after vacuumizing is reduced.

Preferably, the number of the first bumps 300 in the first accommodating groove 301 may be four, and the four first bumps 300 are respectively presented at positions of the four vertex angles of the accommodating groove, thereby the flatness of the partition plate 30 is further enhanced, and the space of the first accommodating groove 301 is further increased. Under the condition that the battery falls and collides, the extrusion effect of the four vertex angles in the first accommodating groove 301 on the first cell 201 is reduced, so that the safety of the battery is enhanced.

It should be noted that the second bumps and the third bumps may also have the same number as the first bumps 300, and the same technical effect may also be achieved, and details will not be described herein again.

It should be noted that, according to the size of the accommodating groove, other numbers of first bumps 300 may also be presented, which may also achieve the same technical effect, and details will not be described herein again.

The embodiments of the present application further provide an electronic device which includes the foregoing battery.

It should be noted that the electronic device may be a device such as a notebook computer or a smart phone, which is not limited herein. The implementations of the embodiments of the battery are also applicable to the embodiments of the electronic device, and the same technical effect can be achieved, and details will not be described herein again.

In embodiments of this application, terms "include", "comprise" or any other variant thereof are intended to cover a non-exclusive inclusion, so that a process, a method, an article or an apparatus which includes a series of elements not only includes those elements but also includes other elements that are not expressly listed, or further includes elements inherent to the process, the method, the article, or the apparatus. Without more restrictions, an element defined by the phrase "includes a..." does not exclude the existence of other identical elements in the process, the method, the article, or the apparatus that includes the element. In addition, it should be pointed out that, the scope of the methods and device in the embodiments of the present application is not limited to perform functions in the order discussed, and may also include performing the functions in a substantially simultaneous manner or in a reverse order according to the functions involved. For example, the described method may be performed in a different order than that described, and various steps may also be added, omitted or combined. In addition, features described with reference to certain examples may be combined in other examples.

The embodiments of the present application have been described above with reference to the accompanying drawings, however, the present application is not limited to the foregoing specific implementations, the foregoing specific implementations are merely illustrative, but are not intended to be limiting. Under the inspiration of the present application, a person skilled in the art may further make many modifications without departing from the purposes of the present application and the protection scope of the claims, and all the modifications shall fall within the protection scope of the present application.

## Claims

1. A battery, comprising:
a film housing, a first cell, a second cell and a partition plate, wherein the film housing is provided with an accommodating cavity, a first accommodating groove adapting the first cell is formed on a side of the partition plate, the first cell is placed in the first accommodating groove, the second cell is placed on another side of the partition plate, the first accommodating groove and the second cell are disposed side by side in the accommodating cavity, and the first cell and the second cell are separated by the partition plate.

2. The battery according to claim 1, wherein at least one first bump is formed on the first accommodating groove, and each first bump in the at least one first bump protrudes away from an opening of the first accommodating groove.

3. The battery according to claim 2, wherein the at least one first bump comprises four first bumps, and the four first bumps are respectively disposed at four vertex angle positions of the first accommodating groove.

4. The battery according to claim 2 or claim 3, wherein a diameter of the first bump ranges from 0.1 mm to 10 mm; and/or
a height of the first bump ranges from 0.1 mm to 5 mm.

5. The battery according to any one of claims 2 to 4, wherein the first bump abuts against an inner wall of the film housing.

6. The battery according to any one of claims 1 to 5, wherein a second accommodating groove adapted for the second cell is formed on the partition plate, a direction of an opening of the second accommodating groove is opposite to a direction of an opening of the first accommodating groove, the second cell is placed in the second accommodating groove, and the second accommodating groove is disposed in the accommodating cavity.

7. The battery according to claim 6, wherein at least one second bump is formed on the second accommodating groove, and each second bump in the at least one second bump protrudes away from the opening of the second accommodating groove.

8. The battery according to any one of claims 1 to 7, wherein the battery further comprises a third cell, a third accommodating groove adapted for the third cell is further formed on the partition plate, a direction of an opening of the third accommodating groove is the same as a direction of an opening of the first accommodating groove, the third cell is placed in the third accommodating groove, the second cell is located between the first accommodating groove and the third accommodating groove, and the first accommodating groove, the second cell and the third accommodating groove are disposed side by side in the accommodating cavity.

9. The battery according to claim 8, wherein at least one third bump is formed on the third accommodating groove, and each third bump in the at least one third bump protrudes away from the opening of the third accommodating groove.

10. The battery according to claim 9, wherein the first cell, the second cell and the third cell have a same size.

11. The battery according to any one of claims 1 to 10, wherein the partition plate is an organic polymer film.

12. The battery according to claim 11, wherein a material of the organic polymer film comprises one or more of the following: polypropylene, polyvinyl chloride, polyethylene, polyethylene terephthalate, polyamide, polyphthalamide, polyacrylonitrile, polyvinyl formal and polystyrene.

13. The battery according to any one of claims 1 to 12, wherein a thickness of the partition plate ranges from 1 µm to 500 µm.

14. The battery according to claim 13, wherein the thickness of the partition plate ranges from 40 µm to 80 µm.

15. The battery according to any one of claims 1 to 14, wherein a length of the first accommodating groove is 0 mm to 1 mm greater than a length of the first cell; and/ or
a width of the first accommodating groove is 0 mm to 1 mm greater than a width of the first cell.

16. The battery according to any one of claims 1 to 14, wherein a length of the first accommodating groove is 0.3 mm to 0.5 mm greater than a length of the first cell; and/ or,
a width of the first accommodating groove is 0.3 mm to 0.5 mm greater than a width of the first cell.

17. An electronic device, comprising the battery according to any one of claims 1 to 16.
